(19) Europäisches Patentamt / European Patent Office / Office européen des brevets

(11) **EP 2 372 486 B1**

(12) **EUROPEAN PATENT SPECIFICATION**

(45) Date of publication and mention
of the grant of the patent:
**05.06.2013 Bulletin 2013/23**

(51) Int Cl.:
**G05F 1/67** (2006.01)

(21) Application number: **10158569.3**

(22) Date of filing: **31.03.2010**

(54) **Method and arrangement of tracking the maximum power point of a photovoltaic module**

Verfahren und Anordnung zur Verfolgung des maximalen Leistungspunkts eines photovoltaischen Moduls

Procédé et agencement pour le suivi du point d'alimentation maximale d'un module photovoltaïque

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**05.10.2011 Bulletin 2011/40**

(73) Proprietor: **ABB Research Ltd 8050 Zürich (CH)**

(72) Inventors:
• **Coccia, Antonio 5400, Baden (CH)**
• **Escobar, Gerardo 8050, Zürich (CH)**
• **Serpa, Leonardo-Augusto 8008, Zürich (CH)**
• **Paakkinen, Mikko 8050, Zürich (CH)**
• **Pettersson, Sami 8050, Zürich (CH)**

(74) Representative: **Valkeiskangas, Tapio Lassi Paavali Kolster Oy Ab Iso Roobertinkatu 23 P.O. Box 148 00121 Helsinki (FI)**

(56) References cited:
WO-A2-2007/141823    DE-A1- 4 446 627

• CASADEI D ET AL: "Single-Phase Single-Stage Photovoltaic Generation System Based on a Ripple Correlation Control Maximum Power Point Tracking" IEEE TRANSACTIONS ON ENERGY CONVERSION, vol. 21, no. 2, 1 June 2006 (2006-06-01), pages 562-568, XP002597293 DOI: 10.1109/TEC.2005.853784
• CIOBOTARU M ET AL: "Control of single-stage single-phase PV inverter" POWER ELECTRONICS AND APPLICATIONS, 2005 EUROPEAN CONFERENCE ON DRESDEN, GERMANY 11-14 SEPT. 2005, PISCATAWAY, NJ, USA,IEEE, PISCATAWAY, NJ, USA LNKD- DOI: 10.1109/EPE.2005.219501, 11 September 2005 (2005-09-11), pages P.1-P.10, XP010934054 ISBN: 978-90-75815-09-2
• ESRAM T ET AL: "Comparison of Photovoltaic Array Maximum Power Point Tracking Techniques" IEEE TRANSACTIONS ON ENERGY CONVERSION, IEEE SERVICE CENTER, PISCATAWAY, NJ, US LNKD- DOI:10.1109/TEC.2006.874230, vol. 22, no. 2, 1 June 2007 (2007-06-01), pages 439-449, XP011184738 ISSN: 0885-8969

**Description**

FIELD OF THE INVENTION

The present invention relates to a method and an arrangement for tracking the maximum power point (MPP) of a photovoltaic cell or module. More specifically, the invention relates to a method and an arrangement with which the maximum power point can be tracked fast and accurately in single-phase photovoltaic applications and in environments where the irradiation and temperature of the cell changes rapidly.

BACKGROUND OF THE INVENTION

It is known in the art of photovoltaic (PV) cells, modules or arrays to use a maximum power point tracker (MPPT), which tries to ensure that the maximum available power is extracted from the irradiated cells.

Most of the conventional MPPT methods deliver a reference for the PV voltage, which is later used in a limited bandwidth proportional plus integral (PI) controller to generate the amplitude of the grid-side current reference.

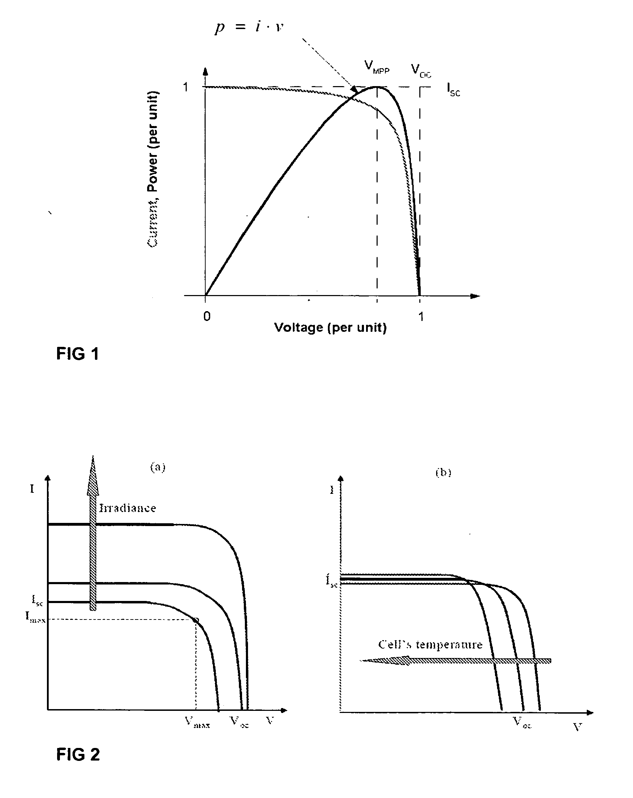

The voltage and current output characteristic of a photovoltaic cell or module is usually represented in the form of $i$-$v$ or $p$-$v$ curves, as shown in Figure 1. In Figure 1 the $i$-$v$ curve is the curve that starts at $i = 1$ and ends at $v = 1$, and the $p$-$v$ curve is the curve having a maximum point when voltage $v = V_{MPP}$.

The most important electrical characteristics of PV panels are presented in Figure 1. Figure 1 shows the short circuit current ($I_{SC}$), which is the maximum value of current the cell can generate, and it is produced under short-circuit condition ($v = 0$ V). Open circuit voltage ($V_{OC}$) corresponds to the highest value of voltage generated in open circuit condition ($i = 0$ A). Further, Figure 1 shows the maximum power point (MPP), which is the operating point (voltage $V_{MPP}$ and current $I_{MPP}$) where the PV cell produces the maximum power ($P_{MPP} = V_{MPP} \cdot I_{MPP}$).

The relationship between voltage and current can be expressed as the following static nonlinearity

$$i = I_{SC}\left[1 - \exp\left(\frac{v - V_{OC} + Rs \cdot i}{V_T}\right)\right] \tag{1}$$

where $V_T$ is referred to as the thermal voltage, which is calculated according to the Boltzmann constant ($K = 1.38 \cdot 10^{-23}$ J/K), magnitude of electron charge ($q = 1.6 \cdot 10^{-19}$ C), PV temperature ($T = $ (K)), idealising factor ($1 < m < 2$) and number of cells in series ($N$), according to $V_T = \dfrac{mNKT}{q}$ ; $R_S$ is the series resistance, which depends on $V_{MPP}$, $I_{MPP}$, $V_{OC}$ and $I_{SC}$ under standard conditions and $V_T$.

The previous expression (1) can be further reduced if $R_S \ll 1$

$$i = I_{SC}\left[1 - \exp\left(\frac{v - V_{OC}}{V_T}\right)\right] \tag{2}$$

It should be noted that current $i = i(v)$ is a static nonlinear function of the voltage, i.e., dynamics are not considered. The power delivered by the PV module can be computed simply as a product of current and voltage as follows

$$p = i \cdot v \tag{3}$$

Manufacturers of photovoltaic cells and modules usually provide the open circuit voltage ($V_{OC}$), the short circuit current ($I_{SC}$) and the maximum power point ($P_{MPP} = V_{MPP} \cdot I_{MPP}$) under standard test conditions (irradiance of 1000W/m² at 25°C cell temperature). However, these parameters, and consequently the $i$-$v$ PV characteristic, are affected by temperature and solar irradiation as shown in Figure 2.

Figure 2 shows that the open circuit voltage $V_{OC}$ varies with both irradiance and temperature. In fact, $V_{OC}$ has a negative temperature coefficient and depends logarithmically on the irradiance [1]. Figure 2 also shows that, although the short circuit current $I_{SC}$ changes proportionally to the irradiance, it is relatively insensitive to temperature variation [1].

In any case, the MPP is varying in function of such environmental conditions, and thus it is important to have a strategy to guarantee the operation of the PV module on the MPP at all times. These strategies are referred to in the literature as maximum power point tracking (MPPT) algorithms [2], [3] and [4].

The PV must be forced to operate in the MPP as shown in the P-V plot of Figure 1. This guarantees that the power extracted from the PV module is the maximum power available. This objective can be recast as a regulation objective that can be fulfilled if one of the following is satisfied as $t \rightarrow \infty$ :

$$
\begin{aligned}
i &\rightarrow i_{MPP} \\
v &\rightarrow v_{MPP} \\
p &\rightarrow P_{MPP}
\end{aligned}
\tag{4}
$$

where $i_{MPP}$, $v_{MPP}$ and $P_{MPP}$ are the current, voltage and power in the MPP. From now on, $(\cdot)^*$ represents the reference for $(\cdot)$.

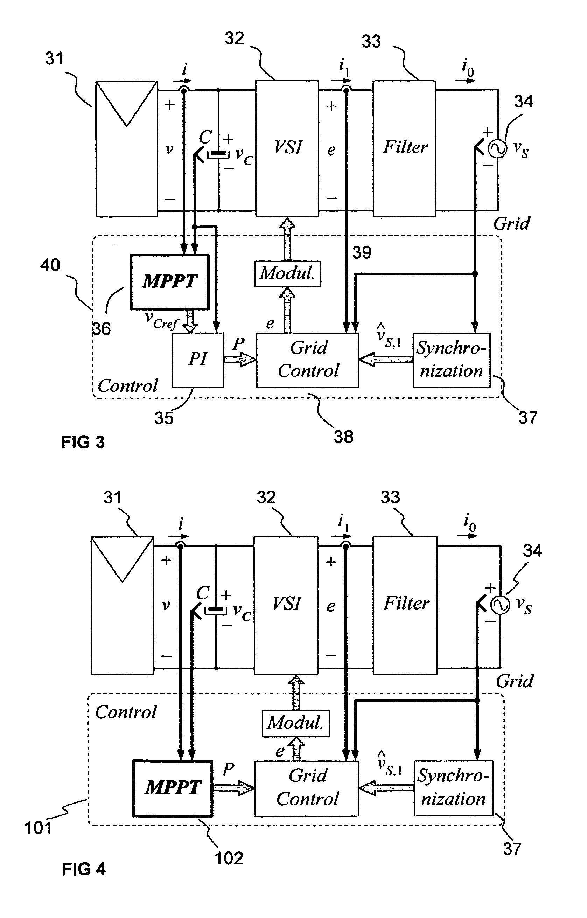

In the case of single-stage inverters, as those shown in Figures 3 and 4, this regulation objective is achieved by modulating the amplitude of the grid-side current $i_o$. The reference for this current, referred to as $P$, is generated by the MPPT algorithm. In Figures 3 and 4 a basic topology for the photovoltaic system is presented. A solar panel, string or module 31 produces a DC voltage $v$. A capacitor C is connected in parallel with the panel, and the voltage from the parallel connection is fed to an inverter 32, which is presented in Figures 3 and 4 as a voltage source inverter (VSI). The output of the inverter is filtered with a filter 33 and fed further to the grid 34.

In the known MPPT algorithms, the generation of $P$ is performed indirectly by means of an intermediate PI controller 35 as shown in Figure 3. In this case, the MPPT 36 generates the voltage reference $v_{Cref}$ for the PV voltage $v_C$, which is then compared to the measured $v_C$, and the difference is used by the PI controller 35 to generate the amplitude $P$. The control block 40 of Figure 3 also includes a synchronization block 37, which reconstructs the frequency and phase of the grid voltage for producing a desired inverter output current, and a grid control block 38, which produces a voltage reference for the modulator 39. The PI controller of Figure 3 must be tuned to have a relatively small bandwidth to alleviate the effect of the 2nd harmonic fluctuation. As a result, a poor dynamic response is obtained as the response speed is considerably reduced.

The current reference is computed from the obtained amplitude information $P$ as

$$
i_0^* = \frac{P}{v_{S,RMS}^2} v_{S,1}
\tag{5}
$$

where $v_{S,1}$ is the fundamental component of the grid voltage, and $v_{S,RMS}$ its RMS value. Usually $v_{S,1}$ is obtained by means of an external PLL or any other synchronization process. A current loop is then designed to guarantee that the grid-side current $i_0$ follows such a reference $i^*_0$ defined above in an accurate and fast manner.

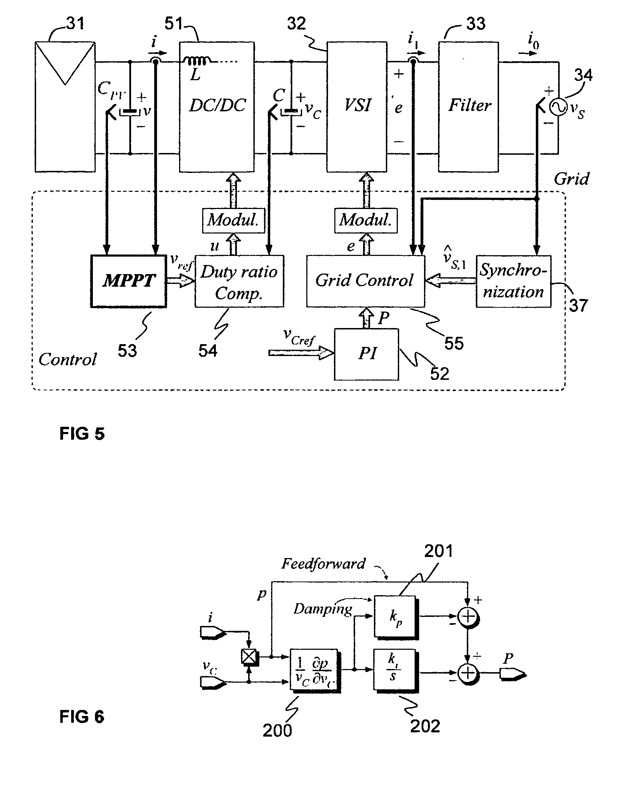

In the case of dual-stage converters, as shown in Figure 5, the MPPT generates the voltage reference $v_{ref}$ for the input capacitor $C_{PV}$ (PV voltage), which is then used to compute the duty ratio $u$ in block 54 for the DC-DC converter 51. In most dual-stage topologies, the output voltage of the DC-DC converter is controlled by the inverter, while the input voltage $v$ is controlled by the DC-DC converter. That is, the DC-DC converter 51 is responsible for guaranteeing the operation in the MPP 53. The amplitude $P$ for the current reference is generated by a PI controller 52 that guarantees the regulation of the capacitor voltage $v_C$ towards a given constant reference $v_{Cref}$. The voltage reference $v_{Cref}$ is a design parameter defined externally. The amplitude $P$ is fed to a grid control block 55, which operates to produce a voltage reference e for producing a desired current $i_1$.

The most common MPPT algorithms are the constant voltage (CV), the perturbation and observation (P&O) and the incremental conductance (IncCond), and modifications to them. In [2], [3] and [4] a survey on the different MPPT schemes is presented as well as a comparative study. In fact, both P&O and IncCond are based on a perturb and observe approach. The idea behind this approach consists in perturbing the PV voltage by adding or subtracting a small step and then observing the resulting changes in power. A decision based on these changes is then made to decrease or increase the PV voltage in the next sampling time.

From these algorithms, a reference for the PV voltage is obtained, which is later used in a PI system to generate the final control signal, usually the amplitude of the reference for the grid-side current. Both methods, P&O and IncCond, usually oscillate close to the MPP as they are based on a perturb and observe process. On the other hand, the CV has no oscillations but it rarely reaches the MPP.

An interesting issue in MPPT schemes that has attracted the attention of many researchers is the performance under rapidly changing atmospheric conditions [5], [6], [7], [8]. It has been observed that P&O suffers from big excursions in the wrong direction after rapidly changing irradiation conditions, that is, P&O fails to track the MPP effectively, while IncCond may still show good accuracy and efficiency in these conditions.

Document D. Casadei et al: "Single-Phase Single-Stage Photovoltaic Generation System Based on a Ripple Correlation Control Maximum Power Point Tracking", IEEE Transactions on Energy Conversion, vol. 21, no. 2, pages 562-568, 1 June 2006 discloses a MPPT method and system in which low-frequency oscillations in the PV panels by the single-phase utility grid are used in the tracking algorithm.

BRIEF DESCRIPTION OF THE INVENTION

An object of the present invention is to provide a system and a method so as to solve the above problems. The object of the invention is achieved by a system and a method which are characterized by what is stated in the independent claims. Preferred embodiments of the invention are disclosed in the dependent claims.

The invention is based on estimating the derivative of power from the photovoltaic cell as a function of voltage of the cell. The derivative is calculated using fluctuating components present in the (capacitor) voltage and power in the output of the photovoltaic cell.

In contrast to most conventional maximum power point trackers (MPPT) schemes, the present method does not follow the perturbation and observation approach. Instead, the idea behind the proposed method is to use the information on the gradient of power with respect to the PV voltage to establish the amplitude of the grid-side current, which, in its turn, guarantees convergence of state trajectories towards the MPP. The present scheme is thus referred to as a direct gradient maximum power point tracker DG-MPPT.

Most of the conventional MPPT methods deliver a reference for the PV voltage, which is later used in a limited bandwidth proportional plus integral (PI) controller to generate the amplitude of the grid-side current reference. In contrast, the present method delivers the amplitude directly, thus naturally guaranteeing a considerably faster response.

The DG-MPPT computes the control signal as the integral of the gradient, which leads in principle to a faster response. Further, a damping term and a feedforward term are added to this basic scheme to enhance the stability and improve the dynamic response. These characteristics are of special interest in rapidly changing cell temperature and irradiation conditions.

The computation of the power gradient is estimated in the case of single-stage inverters using the information provided by the unavoidable $2^{nd}$ harmonic ripple present in voltage and power. This ripple is mainly due to the natural power fluctuation in single-phase applications. In the case of dual-stage converters, i.e., whenever a DC-DC converter is included (to boost the voltage) between the PV and the inverter, the $2^{nd}$ harmonic ripple is not present on the PV signals, as it has been decoupled by the DC-DC converter. In this case, a relatively small ripple is injected having a known fixed frequency, for instance at the $2^{nd}$ harmonic. Therefore, the DG-MPPT scheme can be used in connection with dual-stage converters with slight modifications.

In either case, the approximation is reduced to extract such a ripple from voltage and power, and then to correlate and process this information to obtain the approximate of the gradient.

In contrast to known MPP methods, the DG-MPPT of the invention directly delivers the control signal $P$, which represents the modulation amplitude used to build the grid-side current reference. Most MPPT schemes first deliver a PV voltage reference, which is later compared to the measured PV voltage, and the error is processed by a PI to generate the control signal $P$.

The DG-MPPT guarantees a fast response under rapidly and gradually changing environmental conditions, i.e. in cell temperature and solar irradiation changes. The present invention uses the direction of the gradient of power with respect to the PV voltage. Theoretically this is the steepest way to reach the MPP, and therefore rapid responses are obtained despite rapid changes in cell temperature and irradiation. These issues are automatically solved without further modifications as in conventional perturbation and observation methods.

The DG-MPPT is not based on the perturbation and observation approach, therefore no chattering is expected at all in any signal. Instead, a smooth response towards the MPP is obtained. This has the additional benefit of avoiding the introduction of further distortion on the grid-side current reference, and on the grid-side current itself.

The DG-MPPT design is based on the structure of the dynamical model. The use of this information in the controller design guarantees more appropriate responses, because the physical capabilities of the system are respected and exploited to their maximum extent.

The DG-MPPT includes damping and feedforward terms to enhance stability and to improve the dynamical response.

The present invention concentrates on the regulation towards the Maximum Power Point (MPP) of a photovoltaic module, which is connected to the grid either using a single-stage inverter or a dual-stage inverter, as shown in Figures 4 or 5, respectively.

BRIEF DESCRIPTION OF THE DRAWINGS

In the following, the invention will be described in greater detail by means of preferred embodiments with reference to the attached drawings, in which

Figure 1 shows *i-v* and *p-v* curves of a PV panel,

Figure 2 shows the influence of (a) solar irradiance and (b) cell's temperature on the PV *i-v* characteristic curve,

Figure 3 shows a connection of the PV panel to the grid by means of a single-stage inverter, and controller using an indirect MPPT,

Figure 4 shows a connection of the PV panel to the grid by means of a single-stage inverter, and a controller according to an embodiment,

Figure 5 shows a connection of the PV panel to the grid by means of a dual-stage inverter, and a controller according to an embodiment,

Figure 6 shows a direct regulation controller DG-MPPT for the single-stage inverter according to an embodiment,

Figure 7 shows DG-MPPT for a single-stage inverter according to an embodiment,

Figure 8 shows examples of estimators of fluctuation of $v_C$ and $p$,

Figure 9 shows examples of estimators of fluctuation of $v_C$ and $p$ with $\omega_0$ a known constant,

Figure 10 shows a notch filter used to cancel out the 2nd and the 4th harmonic components from the product $\tilde{\tilde{p}}v_C$,

Figure 11 shows a notch filter used to cancel out the 2nd and the 4th harmonic components from the product $\tilde{p}\tilde{v}_C$, when the fundamental frequency $\omega_0$ is a well known constant,

Figure 12 shows simplifications to the proposed DG-MPPT for a single-stage inverter,

Figure 13 shows an example of a single-phase inverter grid-connected through an LCL filter,

Figure 14 shows a biased sinusoidal irradiation profile for simulations,

Figure 15 shows responses to a biased sinusoidal irradiation profile of (from top to bottom) voltage, current and power in the PV module,

Figure 16 shows responses to a biased sinusoidal irradiation profile:

(solid line) *i-v* curve and (dotted line) *p-v* curve,

Figure 17 shows responses of the current amplitude *P* to a biased sinusoidal irradiation profile,

Figure 18 shows steady-state grid-side current $i_0$ responses,

Figure 19 shows an embodiment of a DG-MPPT for a dual-stage inverter,

Figure 20 shows a detail of the dual-stage single-phase inverter using a DC-DC boost converter,

Figure 21 shows responses to a biased sinusoidal irradiation profile of (from top to bottom) voltage, current and power in the PV module considering a dual-stage inverter, and

Figure 22 shows a zoom of responses to a biased sinusoidal irradiation profile of (top) voltage and (bottom) power in the PV module considering a dual-stage inverter.

DETAILED DESCRIPTION OF THE INVENTION

In the present invention, an MPPT controller uses the information of the derivative of power *p* as a function of $v_C$, i.e. $\dfrac{\partial p}{\partial v_C}$ · . The idea of using the derivative $\dfrac{\partial p}{\partial v_C}$ has a very intuitive significance since it represents the slope of the *p-v* characteristic curve. It should be noted that the derivative is exactly zero at $v_C = v_{MPP}$, it is positive for $v_C < v_{MPP}$, and negative for $v_C > v_{MPP}$.

As seen from Figure 4, current from the photovoltaic panel and the capacitor voltage are measured. These measured values are fed to a control block 101, and more specifically to a maximum power point tracker MPPT 102. Figure 6 shows the basic structure of the MPPT having the measured current and the capacitor voltage as inputs.

From the block diagram of Figure 6 it can be seen that the measured current and voltage are multiplied, and the obtained product, representing power, is fed to a derivative block 200 together with the measured capacitor voltage. The block 200 calculates the above-mentioned derivative and further divides the derivative by the measured capacitor voltage. The division by $v_C$ makes a normalization and also helps to balance the slope whose absolute value is much

lower in $v_C < v_{MPP}$ than in $v_C > v_{MPP}$. $v_C$ is positive in the whole operating region, and thus this division does not affect the sign of the slope. The functioning of the method is based on the information of the sign of such a slope.

According to an embodiment, the obtained derivative is then used in the PI plus feedforward controller as shown in the block diagram of Figure 6, where $k_p$ and $k_i$ are the proportional and integral gains in blocks 201 and 202, respectively. As further seen in Figure 6, the results from the blocks 201 and 202 are subtracted from the calculated power signal $p$ for achieving a signal $P$, which is the outcome of the MPPT of the invention and is used as a reference value for the amplitude of the output current, as explained above.

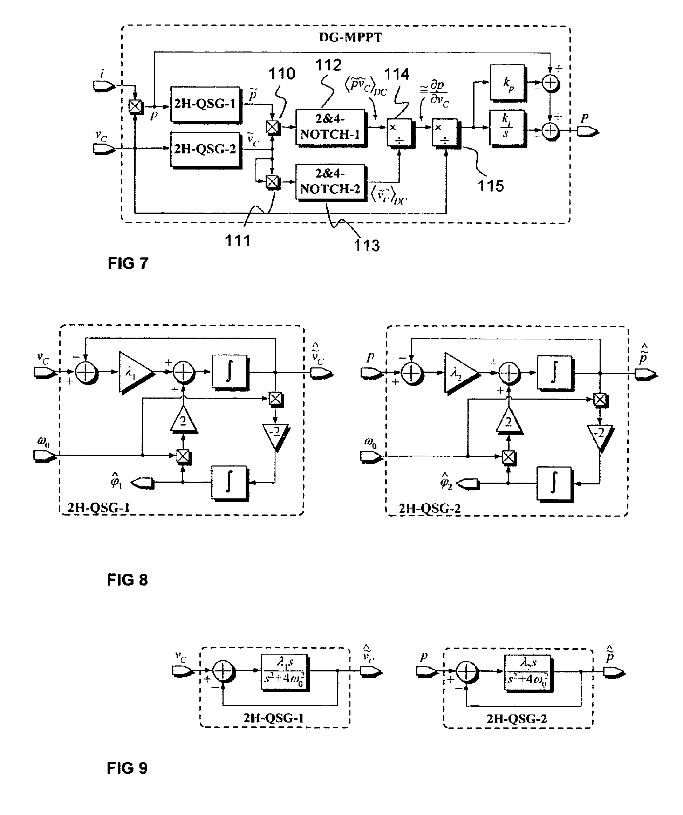

The estimation of the derivative $\dfrac{\partial p}{\partial v_C}$ is based on the information provided by the 2nd harmonic component of the unavoidable fluctuation present in both power and voltage, $\tilde{p}$ and $\tilde{v}_C$, respectively. These harmonic components are then processed as shown in the more detailed diagram of the DG-MPPT shown in Figure 7.

According to an embodiment of the invention, the second harmonic components are extracted from the power and voltage signals. The extraction of the components can be carried out by band-pass filtering the signals. In the embodiment of Figure 7, the 2nd harmonic components $\tilde{p}$ and $\tilde{v}_C$ are extracted from the power and voltage signals, respectively, by means of estimators referred to as quadrature signals generators of the second harmonic component (2H-QSG). Each estimator 2H-QSG is, in fact, a band-pass filter (BPF) tuned at twice the fundamental frequency, and thus, it is able to extract the 2nd harmonic component.

The block diagrams of estimators 2H-QSG-1 and 2H-QSG-2 are given in Figure 8, where $\hat{\tilde{p}}$ and $\hat{\tilde{v}}_C$ represent the estimates of $\tilde{p}$ and $\tilde{v}_C$, respectively, where $\lambda_1$ and $\lambda_2$ are positive design parameters used here to introduce damping. The auxiliary variables $\hat{\varphi}_1$ and $\hat{\varphi}_2$ are the estimates of the quadrature companions of signals $\tilde{v}_C$ and $\tilde{p}$, respectively. That is, $\hat{\varphi}_1$ and $\hat{\varphi}_2$ are equal to $\tilde{p}$ and $\tilde{v}_C$, , respectively, both being phase-shifted 90 degrees ahead. It should be noted that these estimators depend on the fundamental frequency $\omega_0$ of the grid voltage signal, which can be obtained with an external PLL.

In the case that the fundamental frequency $\omega_0$ is known and constant, the estimators presented in Figure 8 can be reduced to the equivalent representation shown in Figure 9.

The frequency response of the estimators 2H-QSG-1 and 2H-QSG-2 consists of a very narrow resonant peak tuned at twice the fundamental frequency. These very selective estimators can thus be used as effective estimators of the second harmonic component with a relatively fast response.

To reduce the notation, in what follows, we exclude the hat symbol from the estimates obtained above.

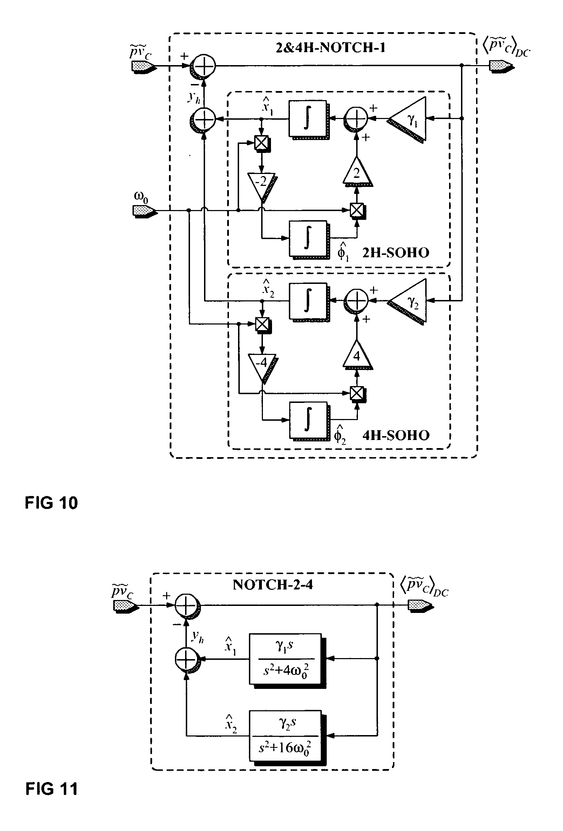

In an embodiment of the invention, the 2nd harmonic components $\tilde{p}$ and $\tilde{v}_C$ are multiplied with multiplication blocks 110 and 111 to obtain $\tilde{p}\tilde{v}_C$ and $\widetilde{p}\tilde{v}_C$ as shown in Figure 7. These products mainly contain a DC component plus 2nd and perhaps 4th harmonics. From these products, the corresponding DC component is extracted by means of notch filters. The notch filters for the products $\tilde{p}\tilde{v}_C$ and $\tilde{v}_C^2$ are referred to as 2&4H-NOTCH-1 and 2&4H-NOTCH-2, respectively. As they are both similar, a block diagram of only the notch filter for the product $\tilde{p}\tilde{v}_C$ is shown in Figure 10.

The idea behind the notch filter consists in designing an estimator for the harmonic distortion $y_h$, which in this case is mainly composed by the 2nd and 4th harmonic components. This estimated disturbance $y_h$ is then subtracted from the overall polluted signal $\tilde{p}\tilde{v}_C$ as shown in Figure 10, thus yielding the DC component mainly. Notice that the estimator is composed of two second-order harmonic oscillators (SOHO) tuned at the 2nd (2H-SOHO) and 4th harmonics (4H-SOHO), where $\gamma_1$ and $\gamma_2$ are two positive design parameters that simultaneously fix the gain and the quality factor of the notch filters.

In the case of a well known and constant fundamental frequency $\omega_0$, the structure of Figure 10 can be reduced to a structure shown in Figure 11.

According to an embodiment, the DC components $\langle \tilde{p}\tilde{v}_C \rangle_{DC}$ and $\left\langle \tilde{v}_C^2 \right\rangle_{DC}$ are then divided to obtain an approximation of the partial derivative $\dfrac{\partial p}{\partial v_C}$. In Figure 7, the outputs of the notch filters 112 and 113 are divided with a division block 114 for obtaining the mentioned derivative. As mentioned above, the derivative is further divided by the measured capacitor voltage in block 115. The output from the block 115 corresponds to the output of the block 200 of the more general block diagram of Figure 6.

A first tuning rule for the estimation gains $\lambda_k$ and $\gamma_k$ ($k = 1,2$) can be stated as follows. Disregarding, for simplicity, the influence of the frequency response at the 2$^{nd}$ and 4$^{th}$ harmonics of $\omega_0$, we can set the gain $\gamma_k$ and $\lambda_k$ ($k$ = 1,2) as $\gamma_k$ = 2.2/$T_{\gamma,k}$ and $\lambda_k$ = 2.2/$T_{\lambda,k}$, respectively, where $T_{\gamma,k}$ and $T_{\lambda,k}$ are the desired response times for each harmonic component (evaluated between 10% to 90% of a step response of the amplitude of the corresponding sinusoidal perturbation).

To reduce the complexity of the proposed DG-MPPT scheme, the following simplifications are possible.

The moving average term $\langle \widetilde{v}_C^2 \rangle_{DC}$ is always positive, and thus it does not contribute to the detection of the sign of the derivative of power, i.e. the sign of the slope. Therefore, it is possible to neglect this term and concentrate only on the computation of the moving average $\langle \widetilde{p}\widetilde{v}_C \rangle_{DC}$.

Since the voltage $v_C$ is positive in the permissible operation region, then dividing the partial derivative by $v_C$ does not affect the sign of the slope. Therefore, this division can also be avoided.

The average value of power $p$, i.e. its DC component, may be relatively large and may not be completely filtered out in the 2H-QSG-1. Therefore, in an embodiment of the invention, an additional filter 2H-QSG-1 is added in cascade to eliminate this DC component. This same issue may arise in the filtering of voltage $v_C$. In case of a relatively small ripple compared to the DC component of voltage, an additional filter 2H-QSG-2 is also included.

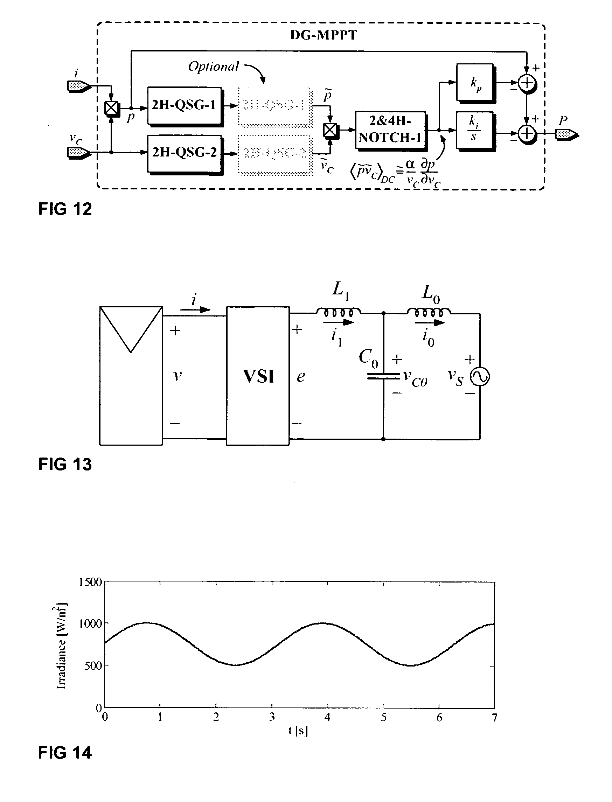

After these simplifications and modifications, the DG-MPPT scheme can be reduced to the diagram shown in Figure 12. In Figure 12, the basic idea of using second harmonic fluctuation for the partial derivative is still employed.

Figure 12 shows the optional band-pass filters connected in cascade and the manner how the DC component of the product of the power signal and the voltage signal is used in estimating the derivative.

In any case, the power $p$, or a filtered version of it, is used as a feedforward term, which improves the dynamical performance of the DG-MPPT. As the signal $p$ contains 2$^{nd}$ and 4$^{th}$ harmonic components, then, according to an embodiment, such components are filtered out before using the signal as the feedforward signal. This filtering is performed, for example, by means of a notch filter of the form 2&4-NOTCH, thus avoiding reinjection of harmonic distortion to the construction of $P$.

For the simulation test, the single-phase PV inverter of Figure 13 is considered, which is grid-connected through an LCL filter. This system has been designed using the following parameters: $L_1$=2 mH, $L_0$=833 $\mu$H, $C_0$=10 $\mu$F, $C$=2200 $\mu$F. This system includes a string of PV modules producing a power of about $P_{MPP}$=2680 W in the MPP with 1000 W/m$^2$ of irradiance and at a temperature of 25°C. This corresponds to a voltage in the MPP of about $v_{MPP}$=362 V and a current of $i_{MPP}$=7.36 A.

It has been assumed that the fundamental frequency is known and has a constant value of $\omega_0$ =100$\pi$ r/s ($f_0$ = 50 Hz). The proportional and integral gains of the DG-MPPT have been tuned to $k_p$ = 2.85 and $k_i$ = 8.5. The parameters for the filters 2H-QSG-1 and 2H-QSG-1 are tuned to $\lambda_1$ = $\lambda_2$ =100 which corresponds to a time response of $T_{\lambda,1}$ = $T_{\lambda,2}$ = 45 ms. The parameters for the 2&4H-NOTCH are tuned to $\gamma_1$ = 100 and $\gamma_2$ = 50 , which corresponds to $T_{\gamma,1}$ = 45 ms and $T_{\gamma,2}$ = 22.5 ms, respectively.

To test the response of the proposed scheme on irradiation changes, a profile for the irradiation has been proposed in such a way that the irradiance changes between 500 and 1000 W/m$^2$, following the shape of a biased sinusoidal function at a frequency of 1/$\pi$ Hz (750+250sin(2t)), as shown in Figure 14. The cell temperature has been fixed to 25°C.

For comparison purposes, the P&O conventional method has also been implemented and tested. In this case the PI parameters have been tuned as follows $k_p$ =15 and $k_i$ = 5. The voltage step has been fixed to 2 V (approx. 0.55% of the voltage in the MPP with 1000 W/m$^2$ irradiance and 25°C of cell temperature) while the sampling time is fixed to 5 ms.

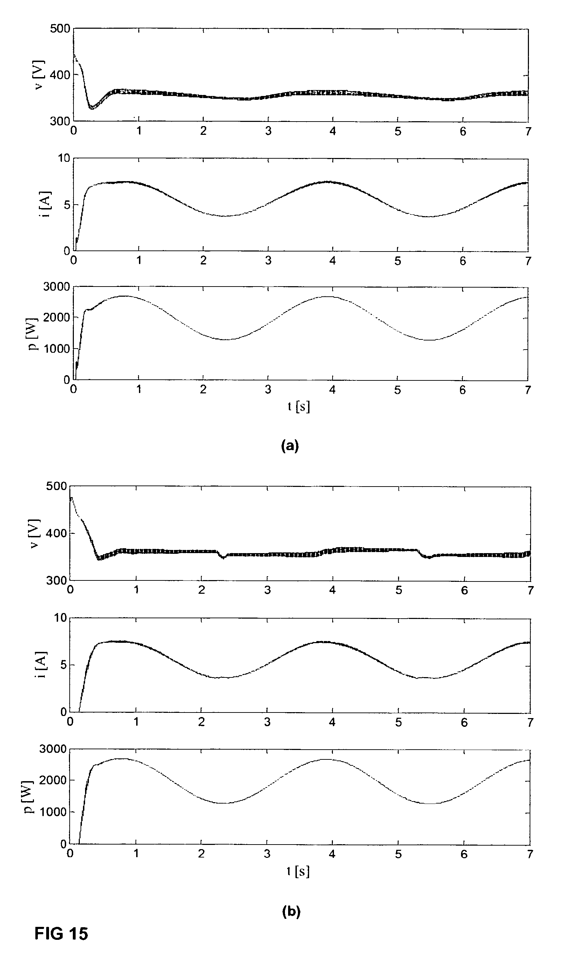

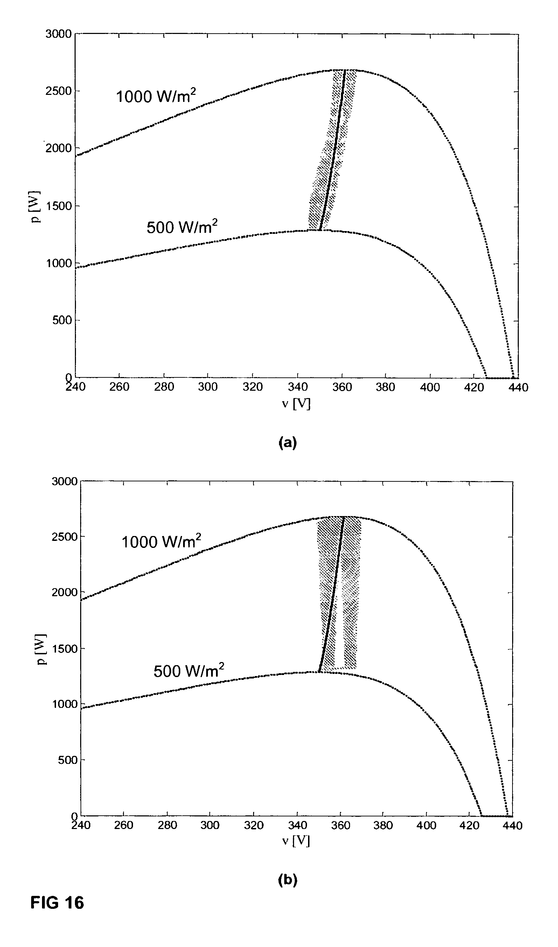

In Figure 15 the responses of the voltage, current and power in the PV module are shown for the P&O (15 (b)) and for the DG-MPPT of the invention (15 (a)). It should be noticed that in the case of the P&O, the voltage suffers from bigger excursions compared to the response of the DG-MPPT. This is more evident in the *i-v* and *p-v* characteristic curves shown in Figure 16. Figure 16 (a) shows curves obtained with the present invention, and 16 (b) corresponding curves obtained with P&O method. It is noticed that the P&O suffers to track the MPP and also shows further deviations. In fact, it is observed that the P&O hardly reaches the MPP at 500 W/m$^2$. In Figure 16, *p-v* responses are shown in solid grey, the *p-v* characteristic curves in dotted lines, while the actual MPP available points (forming a continuous line) are displayed in solid black.

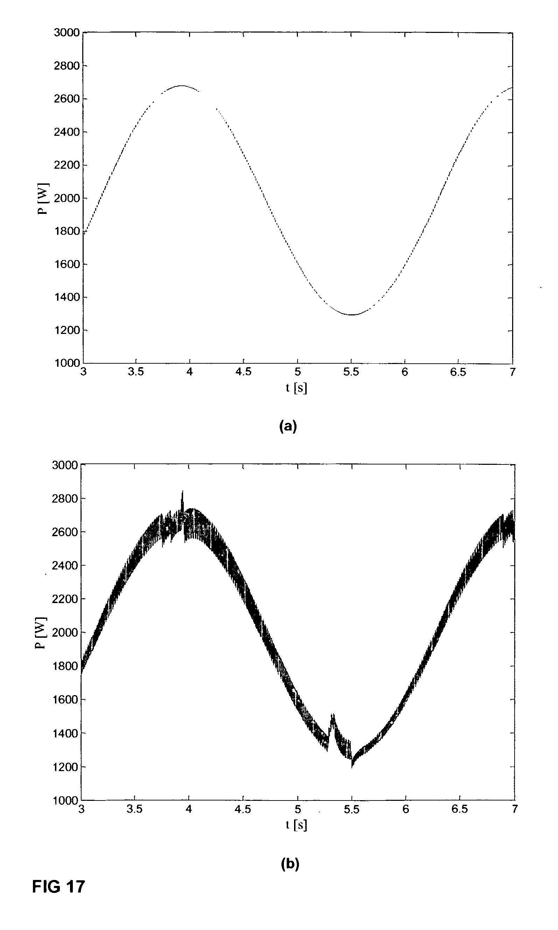

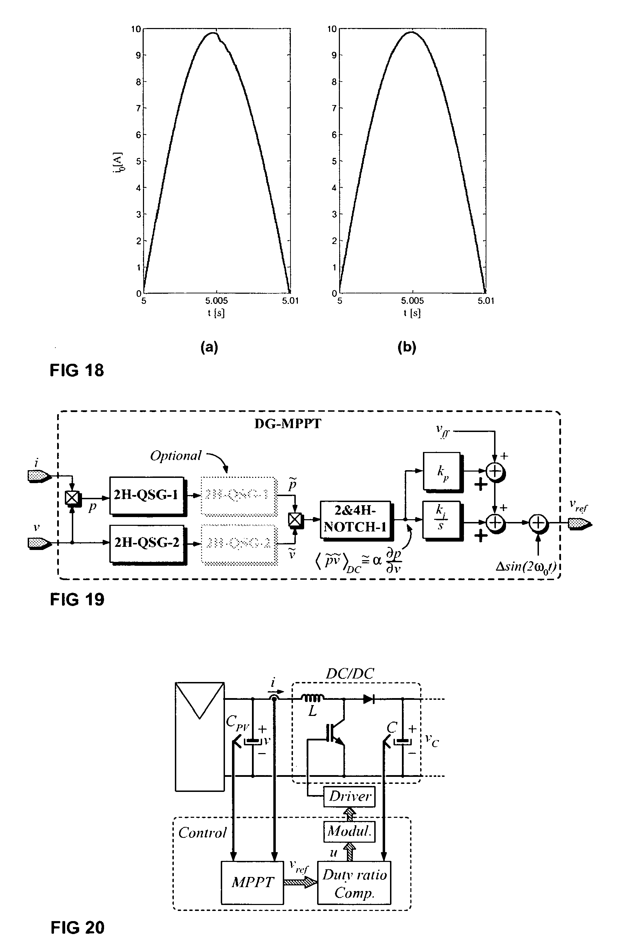

Then, in Figure 17 the response of the computed modulating amplitude $P$ used to compute the current reference according to (5) is shown. It is observed that in the P&O strategy (17 (b)) a considerable chattering occurs in the current reference amplitude $P$, whereas the signal obtained with the invention (17 (a)) is clean. The distortions in the P&O strategy arise from the step perturbations the voltage reference is subjected to. This causes the PI controller to have bigger excursions and thus chattering. This chattering is then propagated to the current reference, which is then followed by the output current. As a result, the output current may exhibit some distortion, as shown in Figure 18. Figure 18 (a) shows the grid-side current waveform of the P&O method and 18 (b) shows the grid-side current waveform obtained with the present invention.

In the case of a dual-stage inverter, the basic idea of the above described MPPT is usable. The MPP scheme must be slightly modified, and the modified scheme is shown in Figure 19. It should be noted that, according to Figure 5, the scheme requires the measurement of the PV voltage (or the voltage of the parallel capacitor) and the current before or after the capacitor. However, it has been observed that a better response is achieved when considering the current after the capacitor $i$. This can be explained by the immediate reaction of the current to changes in the voltage reference produced by the MPPT, which is related to the relative degree 1 of this current $i$ (output) with respect to the voltage reference $v_{ref}$ (control input).

In the embodiment relating to a dual-stage inverter, the MPPT produces a control signal $v_{ref}$, which is used as a reference value for a DC-DC converter as seen from Figure 20, for example. The main differences with respect to the DG-MPPT for the single stage shown in Figure 12 are the changes in the signs of the PI controller, which are now positive as seen from Figure 19. Also, the feedforward signal is now represented by a voltage $v_{ff}$ instead of a power. In this case the feedforward voltage signal $v_{ff}$ can be taken, for instance, as $V_{OC}$ or a fraction thereof. Moreover, in the dual-stage embodiment the DC-DC converter is decoupling the 2nd harmonic ripple, which is due to the power fluctuation. Therefore, this harmonic component does not exist in the voltage and current signals. To overcome this problem, according to an embodiment a small amount of ripple of the form $\Delta\sin(2\omega_0 t)$ is injected through the reference voltage $v_{ref}$. This ripple propagates to the voltage v, current $i$, and thus to power $p$. This small sinusoidal ripple has an amplitude $\Delta$, which can preferably take values up to 2% of $V_{OC}$. In the embodiment the frequency is selected to be the 2nd harmonic of the fundamental frequency, i.e. $2\omega_0$, in order to use the same 2H-QSG and 2&4H-NOTCH blocks as described above. However, other frequency can be selected, as far as those blocks in the DG-MPPT are tuned at the corresponding selected frequency.

Figure 19 shows an embodiment of the DG-MPPT relating to a dual-stage inverter in which the DC component of the product of harmonic components of power and voltage is used in the PI algorithm. This product has the sign of the derivative power with respect to the voltage of the PV module. In Figure 19, the mentioned DC component is shown to correspond to the derivative multiplied by a term $\alpha$ similarly as in Figure 12 in connection with a single-stage inverter.

For the simulation test, the single-phase PV inverter of Figure 20 is considered. This system includes a string of PV modules producing a power of about $P_{MPP}$=1340 W in the MPP with 1000 W/m$^2$ of irradiance and at a temperature of 25°C. This corresponds to a voltage in the MPP of about $V_{MPP}$=182 V and a current of $i_{MPP}$=7.36 A.

The system includes a capacitor in parallel to the PV string with a capacitance of $C_{PV}$=10 $\mu$ F. A DC-DC boost converter has been considered, although the proposed MPPT can be applied to other DC-DC converter. The input inductance of the boost converter is $L$=1 mH. The DC output voltage of the DC-DC boost converter is controlled by the inverter. Therefore we assume that this voltage takes the constant value of $V_C$=365 V. The duty ratio in this case is computed as $u = 1 - \dfrac{v_{ref}}{v_C} = 1 - \dfrac{v_{ref}}{365}$ .

It is assumed that the fundamental frequency is known and has a constant value of $\omega_0$ = 100$\pi$ r/s ($f_0$ = 50 Hz). The proportional and integral gains of the DG-MPPT are tuned to $k_p$ = 0.05 and $k_i$ =10. The parameters for the filters 2H-QSG-1 and 2H-QSG-2 are tuned to $\lambda_1 = \lambda_2$ = 25 which corresponds to a time response of $T_{\lambda,1} = T_{\lambda,2}$ = 88 ms. The parameters for the 2&4H-NOTCH-1 are tuned to $\gamma_1$ = 100 and $\gamma_2$ = 100, which corresponds to $T_{\gamma,1} = T_{\gamma,2}$ = 22.5 ms. The amplitude of the injected sinusoidal ripple is fixed to $\Delta$ = 2 V, with a frequency of 100 Hz, i.e., the 2nd harmonic of the fundamental. The feedforward voltage is fixed to $v_{ff}$=$V_{OC}$=212 V.

Like in the single-stage inverter, to test the response of the proposed scheme on irradiation changes, the same profile for the irradiation is proposed, that is, the irradiance changes between 500 and 1000 W/m$^2$, following the shape of a biased sinusoidal function at a frequency of $1/\pi$ Hz (750+250sin(2t)). The cell temperature is fixed to 25°C.

For comparison purposes, the P&O conventional method has also been implemented and tested in this dual topology. The voltage step in this case is fixed to 2 V (approx. 1.1% of the voltage in the MPP with 1000 W/m$^2$ irradiance and 25°C of cell temperature), while the sampling time is fixed to 2 ms.

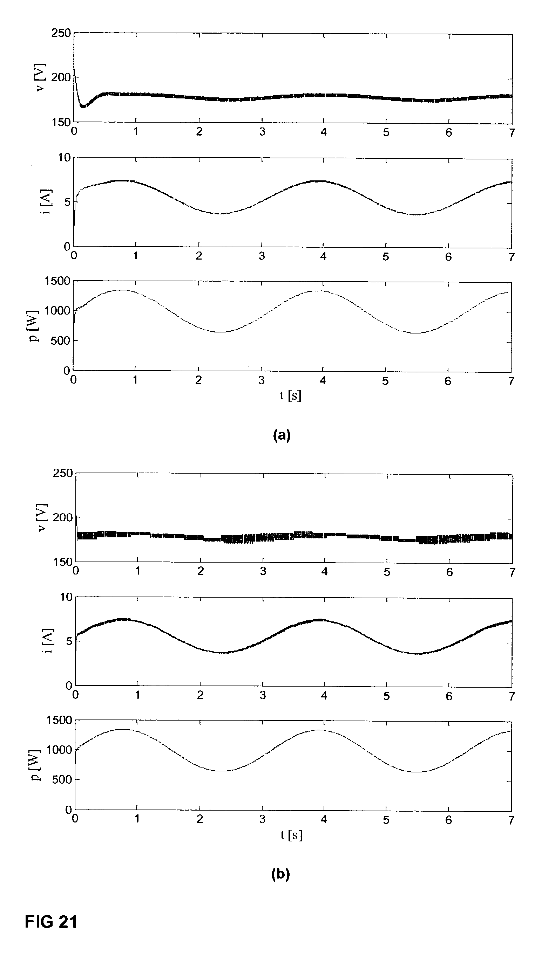

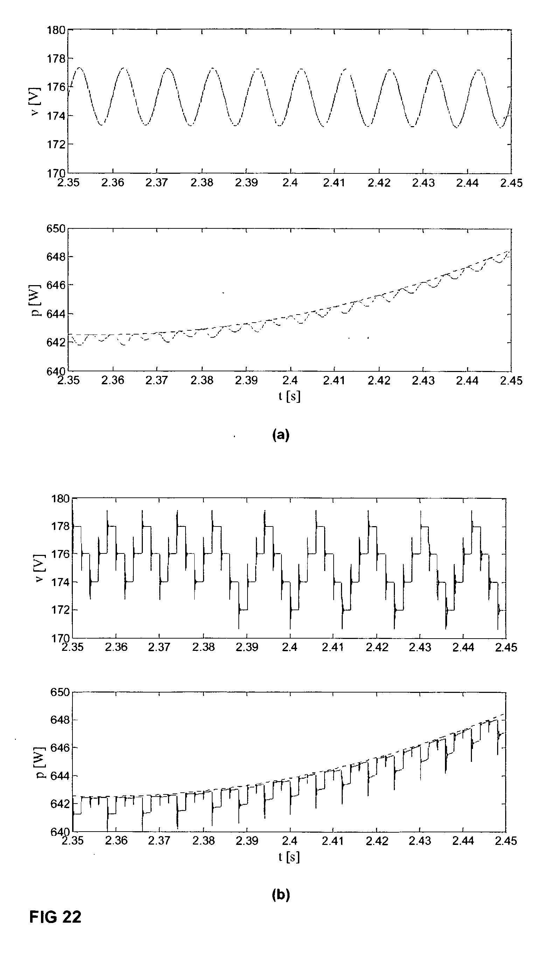

Figure 21 shows responses to a biased sinusoidal irradiation profile of the (top to bottom) voltage, current and power in the PV module. Figure 21 (a) shows the responses of a dual-stage inverter using the embodiment of the invention and 21 (b) shows the responses of the conventional P&O method. It should be noted in Figure 21 that the responses of both schemes DG-MPPT and P&O are very similar, except that the voltage signal exhibits slightly bigger oscillations in the case of the P&O. This can be confirmed by Figure 22 where a voltage and power plots are zoomed (22 (a) DG-MPPT 22 (b) P&O). It can be observed that in some cases the P&O may have bigger excursions under changing environmental conditions. The latter has been thoroughly highlighted in the PV literature [3]. In the plots of Figure 22, the total available power is included in a dashed line. As it can be observed, in dual-stage topologies, both schemes DG-MPPT and P&O keep a close tracking towards the time varying MPP, although the P&O may exhibit slightly bigger oscillations.

In the above, the photovoltaic system is mainly described as having a photovoltaic module. The term "module" should be interpreted broadly as a photovoltaic module consisting of any number of cells, modules, strings or arrays.

It will be obvious to a person skilled in the art that, as the technology advances, the inventive concept can be implemented in various ways. The invention and its embodiments are not limited to the examples described above but may vary within the scope of the claims.

**REFERENCES**

[1] W. Zhou, H. Yang, Z. Fang, "A novel model for photovoltaic array performance prediction," Applied Energy, Vol. 84(12), pp. 1187-1198, Dec. 2007.

[2] M.C. Cavalcanti, K.C. Oliveira, G.M. Azevedo, D. Moreira and F.A. Neves, "Maximum power point tracker techniques for photovoltaic systems," in Proc. Power Electronics and Intelligent Control for Energy Conservation PELINCEC'05, 2005, Warsaw, pp. 1-8.

[3] T. Esram, P.L. Chapman, "Comparison of photovoltaic array maximum power point tracking techniques," IEEE Transactions on Energy Conversion, Vol. 22(2), pp. 439-449, June 2007.

[4] E. Koutroulis, K. Kalaitzakis, N.C. Voulgaris, "Development of a microcontroller-based, photovoltaic maximum power point tracking control system," IEEE Trans. on Power Electronics, Vol. 16(1), pp. 46-54, Jan. 2001.

[5] A. Pandey, N. Dasgupta and A.K. Mukerjee, "High-Performance algorithms for drift avoidance and fast tracking in solar MPPT System," IEEE Transactions on Energy Conversion, Vol. 23(2), pp. 681-689, June 2008.

[6] D. Sera, R. Teodorescu, J. Hantschel, and M. Knoll, "Optimized maximum power point tracker for fast-changing environmental conditions," IEEE Transactions on Industrial Electronics, Vol. 55(7), pp. 2629- 2637, July 2008.

[7] M. Miyatake, T. Inada, , I. Hiratsuka, H. Zhao, H. Otsuka and M. Nakano, "Control characteristics of a Fibonacci-search-based maximum power point tracker when a photovoltaic array is partially shaded," in Proc. 4th International Power Electronics and Motion Control Conference IPEMC 2004, 14-16 Aug. 2004, Vol. 2, pp. 816 - 821.

[8] T.Y. Kim, H.G. Ahn, S.K. Park and Y.K. Lee, "A novel maximum power point tracking control for photovoltaic power system under rapidly changing solar radiation," in Proc. IEEE International Symposium on Industrial Electronics ISIE 2001, 12-16 June, 2001, Vol. 2, pp. 1011-1014.

**Claims**

**1.** A method of tracking the maximum power point of a photovoltaic module, the method comprising
measuring current ($i$) from the photovoltaic module,
measuring output voltage ($v_C$) of the photovoltaic module,
calculating power (p) of the module as the product of the measured current ($i$) and output voltage ($v_C$),
extracting a selected harmonic component ($\tilde{p}$) from the calculated power ($p$),
extracting a selected harmonic component ($\tilde{v}_C$) from the measured voltage ($v_C$),
multiplying the extracted harmonic components of power and voltage,
extracting a DC component ($(\tilde{p}\tilde{v}_C)_{DC}$) from the obtained product ($\tilde{p}\tilde{v}_C$),
calculating a square ($\tilde{v}_C^2$) of the extracted harmonic component of voltage,
extracting the DC component ($\left\langle \tilde{v}_C^2 \right\rangle_{DC}$) from the calculated square, and
forming a control signal (P; V$_{ref}$) for controlling an inverter connected to the photovoltaic module by using the extracted DC component in a PI algorithm **characterized in that** the step of forming the control signal (P, Vref) comprises steps of
dividing the extracted DC component ($(\tilde{p}\tilde{v}_C)_{DC}$) of the product of power and voltage by the extracted DC component ($\left\langle \tilde{v}_C^2 \right\rangle_{DC}$) of the calculated square,
dividing the calculated division by the output voltage ($v_C$) of the photovoltaic module, and
using the result of the division in a PI algorithm and subtracting the output of the PI algorithm from a feedforward signal.

**2.** A method according to claim 1, **characterized in that** the forming of the control signal (P) comprises
using the calculated power (p) of the module as a feedforward signal and subtracting the output of the PI algorithm from the feedforward signal, and using the control signal (P) as a current amplitude reference.

3. A method according to claim 1, **characterized in that** the forming of the control signal (P) comprises filtering the calculated power (p), and
using the filtered calculated power of the module as a feedforward signal and subtracting the output of the PI algorithm from the feedforward signal, and using the control signal (P) as a current amplitude reference.

4. A method according to claim 1, **characterized in that**
the forming of the control signal ($V_{ref}$) comprises
using a fixed voltage value as a feedforward signal and adding the output of the PI algorithm to the feedforward signal, further adding a fluctuating voltage signal having a known frequency to the output of the PI algorithm, and
using the control signal as voltage reference signal for controlling a DC-DC converter in a system relating to the photovoltaic module.

5. An arrangement for tracking the maximum power point of a photovoltaic module, the arrangement comprising means for measuring current ($i$) from the photovoltaic module,
means for measuring output voltage ($v_C$) of the photovoltaic module,
means for calculating power (p) of the module as the product of the measured current ($i$) and output voltage ($v_C$),
means for extracting a selected harmonic component ($\tilde{p}$) from the calculated power (p),
means for extracting a selected harmonic component ($\tilde{v}_C$) from the measured voltage ($v_C$)
means for multiplying the extracted harmonic components of power and voltage,
means for extracting a DC component ($\langle \tilde{p}\tilde{v}_C \rangle_{DC}$) from the obtained product ($\tilde{p}\tilde{v}_C$),
means for calculating a square ( $\tilde{v}_C^2$ ) of the extracted harmonic component of voltage,
means for extracting the DC component ( $\left\langle \tilde{v}_C^2 \right\rangle_{DC}$ ) from the calculated square, and
means for forming a control signal (P; $V_{ref}$) for controlling an inverter connected to the photovoltaic module by using the extracted DC component in a PI algorithm, **characterized in that** the means for forming the control signal (P, Vref) comprises further
means for dividing the extracted DC component ($\langle \tilde{p}\tilde{v}_C \rangle_{DC}$) of the product of power and voltage by the extracted DC component ( $\left\langle \tilde{v}_C^2 \right\rangle_{DC}$ ) of the calculated square,
means for dividing the calculated division by the output voltage ($v_C$) of the photovoltaic module, and
means for using the result of the division in a PI algorithm and for subtracting the output of the PI algorithm from a feedforward signal.

6. A photovoltaic inverter comprising the arrangement of claim 5.

**Patentansprüche**

1. Verfahren Verfolgen des maximalen Leistungspunkts photovoltaischen Moduls, das Verfahren Folgendes aufweisend
Messen eines Stroms (i) von dem photovoltaischen Modul,
Messen einer Ausgangsspannung ($v_C$) des photovoltaischen Moduls,
Berechnen einer Leistung (p) des Moduls als das Produkt des gemessenen Stroms (i) und der gemessenen Ausgangsspannung ($v_C$),
Extrahieren einer ausgewählten harmonischen Komponente ($\tilde{p}$) aus berechneten Leistung (p),
Extrahieren einer ausgewählten harmonischen Komponente ($\tilde{v}_C$) aus der Spannung ($v_C$),
Multiplizieren der extrahierten harmonischen Komponenten Leistung und der Spannung,
Extrahieren einer Gleichstromkomponente ($\langle \tilde{p}\tilde{v}_C \rangle_{DC}$) aus dem erhaltenen Produkt ($\tilde{p}\tilde{v}_C$),
Berechnen einer Quadratzahl ( $\tilde{v}_C^2$ ) der extrahierten harmonischen Komponente der Spannung,
Extrahieren der Gleichstromkomponente ( $\left\langle \tilde{v}_C^2 \right\rangle_{DC}$ ) aus der berechneten Quadratzahl und
Bilden eines Steuersignals (P; $V_{ref}$) zum Steuern eines Inverters, welcher mit dem photovoltaischen Modul verbunden ist, indem die extrahierte Gleichstromkomponente in einem PI-Algorithmus verwendet wird, **dadurch gekennzeichnet, dass** der Schritt des Bildes des Steuersignals (P, , $V_{ref}$) die folgenden Schritte aufweist
Dividieren der extrahierten Gleichstromkomponente ($\langle \tilde{p}\tilde{v}_C \rangle_{DC}$) des Produkts von Leistung und Spannung durch die

extrahierte Gleichstromkomponente ( $\langle \tilde{v}_C^2 \rangle_{DC}$) der berechneten Quadratzahl,

Dividieren der berechneten Division durch die Ausgangsspannung ($v_C$) des photovoltaischen Moduls und

Verwenden des Ergebnisses der Division in einem PI-Algorithmus und Subtrahieren der Ausgabe des PI-Algorithmus von einem Vorwärtsübertragungssignal.

2. Verfahren nach Anspruch 1, **dadurch gekennzeichnet, dass** das Bilden des Steuersignals (P) Folgendes aufweist Verwenden der berechneten Leistung (p) des Moduls als ein Vorwärtsübertragungssignal und Subtrahieren der Ausgabe des PI-Algorithmus von dem Vorwärtsübertragungssignal und Verwenden des Steuersignals (P) als eine Stromamplitudenreferenz.

3. Verfahren nach Anspruch 1, **dadurch gekennzeichnet, dass** das Bilden des Steuersignals (P) Folgendes aufweist Filtern der berechneten Leistung (p) und

Verwenden der gefilterten berechneten Leistung des Moduls als ein Vorwärtsübertragungssignal und Subtrahieren der Ausgabe des PI-Algorithmus von dem Vorwärtsübertragungssignal und Verwenden des Steuersignals (P) als eine Stromamplitudenreferenz.

4. Verfahren nach Anspruch 1, **dadurch gekennzeichnet, dass** das Bilden des Steuersignals (V$_{ref}$) Folgendes aufweist Verwenden eines festen Spannungswertes als ein Vorwärtsübertragungssignal und Addieren der Ausgabe des PI-Algorithmus zu dem Vorwärtsübertragungssignal,

ferner Addieren eines fluktuierenden Spannungssignals mit einer bekannten Frequenz zu der Ausgabe des PI-Algorithmus und

Verwenden des Steuersignals als ein Spannungsreferenzsignal zum Steuern eines Gleichstrom-Gleichstrom-Wandlers in einem System, welches das photovoltaische Modul betrifft.

5. Anordnung zum Verfolgen des maximalen Leistungspunkts eines photovoltaischen Moduls, die Anordnung Folgendes aufweisend

Mittel zum Messen eines Stroms (i) von dem photovoltaischen Modul,

Mittel zum Messen einer Ausgangsspannung ($v_C$) des photovoltaischen Moduls,

Mittel zum Berechnen einer Leistung (p) des Moduls als das Produkt des gemessenen Stroms (i) und der gemessenen Ausgangsspannung ($v_C$),

Mittel zum Extrahieren einer ausgewählten harmonischen Komponente ($\tilde{p}$) aus der berechneten Leistung (p),

Mittel zum Extrahieren einer ausgewählten harmonischen Komponente ($\tilde{v}_C$) aus der gemessenen Spannung ($v_C$),

Mittel zum Multiplizieren der extrahierten harmonischen Komponenten der Leistung und der Spannung,

Mittel zum Extrahieren einer Gleichstromkomponente ($\langle \widetilde{pv}_C \rangle_{DC}$) aus dem erhaltenen Produkt ($\widetilde{pv}_C$),

Mittel zum Berechnen einer Quadratzahl ( $\tilde{v}_C^2$ ) der extrahierten harmonischen Komponente der Spannung,

Mittel zum Extrahieren der Gleichstromkomponente ( $\langle \tilde{v}_C^2 \rangle_{DC}$) aus der berechneten Quadratzahl und

Mittel zum Bilden eines Steuersignals (P; V$_{ref}$) zum Steuern eines Inverters, welcher mit dem photovoltaischen Modul verbunden ist, indem die extrahierte Gleichstromkomponente in einem PI-Algorithmus verwendet wird, **dadurch gekennzeichnet, dass** Mittel zum Bilden des Steuersignals (P, V$_{ref}$) weiterhin Folgendes aufweist

Mittel zum Dividieren der extrahierten Gleichstromkomponente ($\langle \widetilde{pv}_C \rangle_{DC}$) des Produkts von Leistung und Spannung durch die extrahierte Gleichstromkomponente ( $\langle \tilde{v}_C^2 \rangle_{DC}$) der berechneten Quadratzahl,

Mittel zum Dividieren der berechneten Division durch die Ausgangsspannung ($v_C$) des photovoltaischen Moduls und

Mittel zum Verwenden des Ergebnisses der Division in einem PI-Algorithmus und zum Subtrahieren der Ausgabe des PI-Algorithmus von einem Vorwärtsübertragungssignal.

6. Photovoltaischer Inverter,
aufweisend die Anordnung nach Anspruch 5.

**Revendications**

1. Procédé destiné à suivre le point de fonctionnement optimum d'un module photovoltaïque, le procédé comprenant :

la mesure du courant (i) en provenance du module photovoltaïque ;

la mesure de la tension de sortie ($v_c$) du module photovoltaïque ;

le calcul de la puissance (p) du module comme étant le produit du courant mesuré (i) par la tension de sortie ($v_c$) ;

l'extraction d'une composante harmonique sélectionnée ($\tilde{p}$) à partir de la puissance calculée (p);

l'extraction d'une composante harmonique sélectionnée ($\tilde{v}_c$) à partir de la tension mesurée ($v_c$) ;

la multiplication des composantes harmoniques extraites de la puissance et de la tension ;

l'extraction d'une composante continue ($\langle\tilde{p}\tilde{v}_c\rangle_{DC}$) à partir du produit obtenu ($\tilde{p}\tilde{v}_c$) ;

le calcul du carré ($\widetilde{v}_c^{\,2}$) de la composante harmonique extraite de la tension,

l'extraction de la composante continue ($\left\langle\widetilde{v}_c^{\,2}\right\rangle_{DC}$) à partir du carré calculé ; et

la formation d'un signal de commande (P ; $V_{ref}$) pour commander un onduleur connecté au module photovoltaïque en utilisant la composante continue extraite dans un algorithme PI, **caractérisé en ce que** l'étape de formation du signal de commande (P ; $V_{ref}$) comprend des étapes consistant à :

diviser la composante continue extraite ($\langle\tilde{p}\tilde{v}_c\rangle_{DC}$) du produit de la puissance par la tension, par la composante continue extraite ($\left\langle\widetilde{v}_c^{\,2}\right\rangle_{DC}$) du carré calculé ;

diviser la division calculée par la tension de sortie ($v_c$) du module photovoltaïque ; et

utiliser le résultat de la division dans un algorithme PI et soustraire la sortie de l'algorithme PI d'un signal d'anticipation.

2. Procédé selon la revendication 1, **caractérisé en ce que** la formation du signal de commande (P) comprend :

l'utilisation de la puissance calculée (*p*) du module en tant que signal d'anticipation et la soustraction de la sortie de l'algorithme PI du signal d'anticipation, et l'utilisation du signal de commande (P) en tant que référence d'amplitude de courant.

3. Procédé selon la revendication 1, **caractérisé en ce que** la formation du signal de commande (P) comprend :

le filtrage de la puissance calculée (*p*) ; et

l'utilisation de la puissance calculée filtrée du module en tant que signal d'anticipation et la soustraction de la sortie de l'algorithme PI du signal d'anticipation, et l'utilisation du signal de commande (P) en tant que référence d'amplitude de courant.

4. Procédé selon la revendication 1, **caractérisé en ce que** :

la formation du signal de commande ($V_{ref}$) comprend :

l'utilisation d'une valeur de tension fixe en tant que signal d'anticipation et l'ajout de la sortie de l'algorithme PI au signal d'anticipation ;

l'ajout en outre d'un signal de tension variable présentant une fréquence connue à la sortie de l'algorithme PI ; et

l'utilisation du signal de commande en tant que signal de référence de tension pour commander un convertisseur continu-continu dans un système se rapportant au module photovoltaïque.

5. Agencement destiné à suivre le point de fonctionnement optimum d'un module photovoltaïque, l'agencement comprenant :

un moyen pour mesurer le courant (*i*) en provenance du module photovoltaïque ;

un moyen pour mesurer la tension de **sortie** (*$v_c$*) du module photovoltaïque ;

un moyen pour calculer la puissance (*p*) du module comme étant le produit du courant mesuré (*i*) par la tension de sortie (*$v_c$*) ;

un moyen pour extraire une composante harmonique sélectionnée ($\tilde{p}$) à partir de la puissance calculée (*p*) ,

un moyen pour extraire une composante harmonique sélectionnée (*$\tilde{v}_c$*) à partir de la tension mesurée (*$vc$*) ;

un moyen pour multiplier les composantes harmoniques extraites de la puissance et de la tension ;

un moyen pour extraire une composante continue (*$\langle\tilde{p}\tilde{v}_c\rangle_{DC}$*) à partir du produit obtenu (*$\tilde{p}\tilde{v}_c$*) ;

un moyen pour calculer le carré ( $v_c^-$ ) de la composante harmonique extraite de la tension ;

un moyen pour extraire la composante continue ( $\left\langle \widetilde{v}_c^2 \right\rangle_{DC}$ ) à partir du carré calculé ; et

un moyen pour former un signal de commande (P ; V$_{ref}$) pour commander un onduleur connecté au module photovoltaïque en utilisant la composante continue extraite dans un algorithme PI, **caractérisé en ce que** le moyen pour former le signal de commande (P ; V$_{ref}$) comprend en outre :

un moyen pour diviser la composante continue extraite ( $(\widetilde{p}\widetilde{v})_{DC}$ ) du produit de la puissance par la tension, par la composante continue extraite ( $\left\langle \widetilde{v}_c^2 \right\rangle_{DC}$ ) du carré calculé ;

un moyen pour diviser la division calculée par la tension de sortie ( $v_c$ ) du module photovoltaïque ; et

un moyen pour utiliser le résultat de la division dans un algorithme PI et pour soustraire la sortie de l'algorithme PI d'un signal d'anticipation.

6. Onduleur photovoltaïque comprenant l'agencement de la revendication 5.

$$p = i \cdot v$$

FIG 1

FIG 2

**FIG 3**

**FIG 4**

**FIG 5**

**FIG 6**

FIG 7

FIG 8

FIG 9

**FIG 10**

**FIG 11**

**FIG 12**

**FIG 13**

**FIG 14**

(a)

(b)

FIG 15

(a)

(b)

**FIG 16**

(a)

(b)

**FIG 17**

(a)         (b)

**FIG 18**

**FIG 19**

**FIG 20**

(a)

(b)

**FIG 21**

(a)

(b)

**FIG 22**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. CASADEI et al.** Single-Phase Single-Stage Photovoltaic Generation System Based on a Ripple Correlation Control Maximum Power Point Tracking. *IEEE Transactions on Energy Conversion,* 01 June 2006, vol. 21 (2), 562-568
- **W. ZHOU ; H. YANG ; Z. FANG.** A novel model for photovoltaic array performance prediction. *Applied Energy,* December 2007, vol. 84 (12), 1187-1198
- **M.C. CAVALCANTI ; K.C. OLIVEIRA ; G.M. AZEVEDO ; D. MOREIRA ; F.A. NEVES.** Maximum power point tracker techniques for photovoltaic systems. *Proc. Power Electronics and Intelligent Control for Energy Conservation PELINCEC'05,* 2005, 1-8
- **T. ESRAM ; P.L. CHAPMAN.** Comparison of photovoltaic array maximum power point tracking techniques. *IEEE Transactions on Energy Conversion,* June 2007, vol. 22 (2), 439-449
- **E. KOUTROULIS ; K. KALAITZAKIS ; N.C. VOULGARIS.** Development of a microcontroller-based, photovoltaic maximum power point tracking control system. *IEEE Trans. on Power Electronics,* January 2001, vol. 16 (1), 46-54

- **A. PANDEY ; N. DASGUPTA ; A.K. MUKERJEE.** High-Performance algorithms for drift avoidance and fast tracking in solar MPPT System. *IEEE Transactions on Energy Conversion,* June 2008, vol. 23 (2), 681-689
- **D. SERA ; R. TEODORESCU ; J. HANTSCHEL ; M. KNOLL.** Optimized maximum power point tracker for fast-changing environmental conditions. *IEEE Transactions on Industrial Electronics,* July 2008, vol. 55 (7), 2629-2637
- **M. MIYATAKE ; T. INADA ; I. HIRATSUKA ; H. ZHAO ; H. OTSUKA ; M. NAKANO.** Control characteristics of a Fibonacci-search-based maximum power point tracker when a photovoltaic array is partially shaded. *Proc. 4th International Power Electronics and Motion Control Conference IPEMC 2004,* 14 August 2004, vol. 2, 816-821
- **T.Y. KIM ; H.G. AHN ; S.K. PARK ; Y.K. LEE.** A novel maximum power point tracking control for photovoltaic power system under rapidly changing solar radiation. *Proc. IEEE International Symposium on Industrial Electronics ISIE 2001,* 12 June 2001, vol. 2, 1011-1014